Europäisches Patentamt

(19) European Patent Office

Office européen des brevets

(11) Publication number: **0 028 139**
**B1**

(12) # EUROPEAN PATENT SPECIFICATION

(45) Date of publication of patent specification: 05.03.86

(51) Int. Cl.⁴: **G 05 D 13/62**

(21) Application number: **80303768.8**

(22) Date of filing: **23.10.80**

(54) Sewing machine.

(30) Priority: **26.10.79 JP 139073/79**

(43) Date of publication of application:
**06.05.81 Bulletin 81/18**

(45) Publication of the grant of the patent:
**05.03.86 Bulletin 86/10**

(84) Designated Contracting States:
**DE FR GB NL**

(56) References cited:
**FR-A-1 453 454**
**US-A-4 040 508**
**US-A-4 130 785**

(73) Proprietor: **Matsushita Electric Industrial Co., Ltd.**
**1006, Oaza Kadoma**
**Kadoma-shi Osaka-fu, 571 (JP)**

(72) Inventor: **Neki, Shigeo**
**2-11-22-302, Seiiku Joto-ku Osaka-shi**
**Osaka (JP)**
Inventor: **Shinozaki, Nozomu**
**4-42-3, Deguchi Hirakata-shi**
**Osaka (JP)**
Inventor: **Dohi, Takashi**
**1-20-14-410, Higashi-Nakahuri Hirakata-shi**
**Osaka (JP)**

(74) Representative: **Senior, Alan Murray et al**
**J.A. KEMP & CO 14 South Square Gray's Inn**
**London WC1R 5EU (GB)**

Courier Press, Leamington Spa, England.

**Description**

The present invention relates to sewing machines, and, in particular embodiments, to a digital sewing machine speed control system in which machine speed is rapidly controlled in response to a sudden occurrence of load change.

European Patent Application No. 80 303767.0 filed on even date and published under number 28138, describes a sewing machine having in a closed loop a tachogenerator for generating pulses at a frequency variable as a function of the speed of the sewing machine, a speed setting device, a pulse interval counter providing a binary signal indicative of a pulse interval, a clutch-and-brake arrangement coupled to a motor driven shaft of the sewing machine, and a logic circuit for converting said binary signal into a control pulse for application to said clutch-and-brake arrangement. This sewing machine includes a variable frequency divider for dividing the frequency of said tachogenerator output pulses by a factor which is a function of the setting of said speed setting device. Said counter measures the interval between successive ones of the output pulses of said variable frequency divider by counting constant frequency clock pulses. Said logic circuit comprises an arithmetic computing unit for translating said binary signal into a corresponding duration control signal according to a predetermined transfer function describing the relationship between the measured interval and a duration for which said clutch-and-brake arrangement is to be energized, whereby the machine speed can be feedback controlled with the measured interval and binary signal frequency tending to be maintained constant regardless of the setting of the speed setting device.

US—A—4 040 508 shows a speed control system which comprises a speed detector, a reference pulse generator, a control circuit which receives pulses from the detector and generator to control the speed of the shaft. The control circuit includes a counter which measures the interval between successive ones of the speed pulses from the detector by counting the reference pulses from generator. Binary signals representing the measured interval are applied through a latch to a logic circuit including brake AND gates and clutch AND gates. This uses a stepped transfer function to convert the binary signals to control signals of the brake and clutch. US—A—4 130 785 uses a reversible counter which receives a control signal at the up-count input thereof. A digital to analog converter is connected to the counter. Reversible counter and converter act as a phase comparator. A frequency to current converter receives the control signal to generate a frequency deviation signal which is combined with the output of the converter in an amplifier and applied to a motor. Speed related pulses are supplied from a detector to a variable frequency divider and thence to the down-count input of the reversible counter. The frequency to current converter thus acts as a coarse speed control element when the speed of the rotating body deviates substantially from a desired value and the reversible counter acts as a fine speed control element to maintain the speed at the desired value once it is reached.

According to the present invention, there is provided a sewing machine having in a closed loop a tachogenerator for generating pulses at a frequency variable as a function of the speed of the sewing machine, a pulse interval counter for measuring the pulse interval of said generated pulses to provide a binary signal indicative of the measured pulse interval, a clutch-and-brake arrangement coupled to a motor driven shaft of the sewing machine, and a logic circuit for converting said binary signal into a control pulse for application to clutch-and-brake arrangement, characterized in that said logic circuit comprises an arithmetic computing unit for translating said pulse interval indicative binary signal into a corresponding duration control signal according to a transfer function $T = a(t - b)$, where,

the absolute value of $T =$ the duration in which the clutch or the brake of the clutch-and-brake arrangement as the case may be, is to be energized;

$a = $ a constant representing the gain of said closed loop;

$t = $ the measured pulse interval; and

$b = $ a constant.

The present invention also, in preferred forms, provides a sewing machine having in a closed loop a tachogenerator for generating pulses at a frequency variable as a function of the speed of the sewing machine, a pulse interval counter for measuring the pulse interval of said generated pulses to provide a binary signal indicative of the measured pulse interval, a clutch-and-brake arrangement coupled to a motor driven shaft of the sewing machine, and a logic circuit for converting said binary signal into a duration control pulse for application to said clutch-and-brake arrangement, characterised in that said logic circuit comprises an arithmetic computing unit for translating said pulse interval indicative binary signal into said duration control pulse according to a transfer function, and by first and second memories for storing two successive values of said binary signal, the later value being employed by the computing unit for said translation, and in that the arithmetic computing unit comprises means for applying a correction value, corresponding to the difference between the stored binary signal values, to said later value so that said measured interval of the tachogenerator pulses is corrected instantaneously as a function of a change in sewing load.

With the preferred apparatus of the invention, the speed response takes into account not only changes in desired speed but also, and very rapidly, changes in load. This allows the machine to respond very rapidly to sudden load variations which is most important in industrial sewing machines.

Two latching circuits are successively connected to the output of the pulse interval detector which is connected to the frequency divider. A first latch provides a preceding pulse interval data and a second latch provides a most recent pulse interval data. The arithmetic circuit detects the amount and direction of the deviation of the most recent pulse interval from the preceding pulse interval and modifies the most recent pulse interval data in accordance with the detected deviation. As a result, the pulse data derived from the arithmetic circuit and hence the duty cycle of the clutch or brake means is varied in an amount proportional to the rate of speed variation of the sewing machine.

Brief Description of the Drawings

The features and advantages of the invention will become apparent from the following description when read in conjunction with the accompanying drawings, in which:

Fig. 1 is a schematic illustration of the basic block diagram of the digital speed control system of the invention;

Fig. 2 is a graphic illustration of a transfer function which describes the relationship between the interval between successively generated speed pulses and energization period in which the magnetic clutch or brake is operated;

Fig. 3 is an illustration of the modification of the basic embodiment of the invention; and

Fig. 4 is a graphic illustration useful for describing the operation of the embodiment of Fig. 3.

Detailed Description

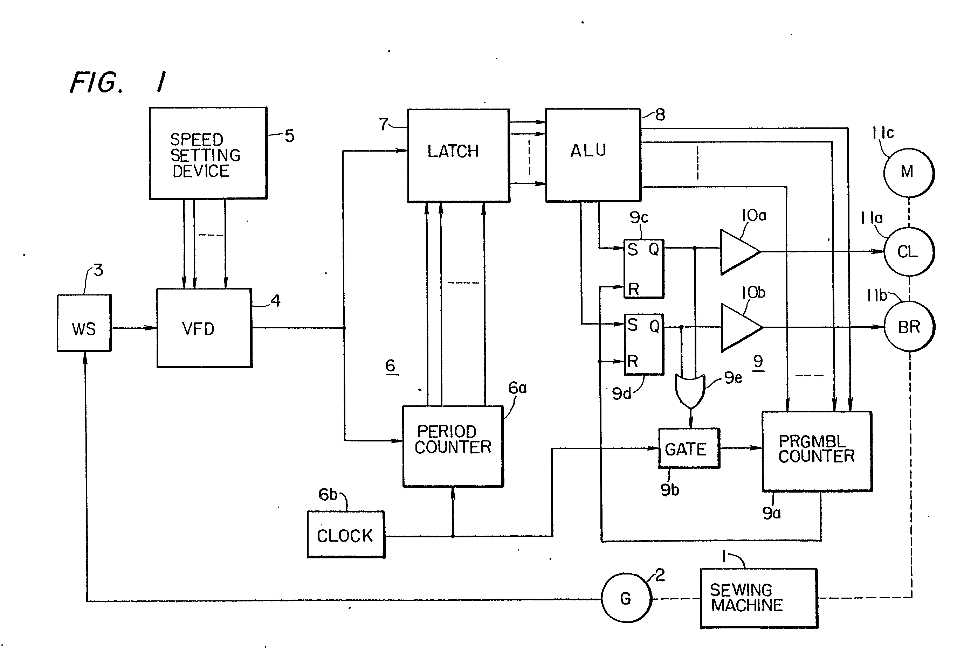

Referring now to Fig. 1, a basic circuit of the sewing machine speed control system of the invention is schematically illustrated. The system includes a sewing machine speed setting device 5 which provides a digital speed setting signal according to the amount of depression of a conventional foot pedal, not shown. An impulse generator 2 of a conventional construction has its rotor operatively connected to the driven shaft of the sewing machine 1 which is driven by a motor 11c. This motor has a driving shaft which is coupled to the driven shaft of the sewing machine by a pulley-and-belt arrangement when a clutch actuating coil 11a is energized. The rotor shaft of motor M is decoupled from the sewing machine by a brake actuating coil 11b which subsequently applies a brake to the driven shaft of the sewing machine. Thus the speed of the sewing machine is controlled by varying the period of energization of coils 11a and 11b. Since the details of the motor construction is well known in the art, Fig. 1 only illustrates the associated parts in schematic form for simplicity. Impulse generator 2 generates a train of 60 equally spaced apart impulses per revolution when the rotor turns at a speed of 200 rpm. The generated impulses are shaped into rectangular pulses by a wave shaping circuit 3 and applied to a variable frequency divider 4. Frequency divider 4 has its program control inputs connected to receive digital signals from the speed setting device 5 so that its output frequency is an integral submultiple of its input frequency which is the division ratio represented by the signal from the setting device 5.

The output of frequency divider 4 is applied to a period detector 6 formed by a period counter 6a and a clock source 6b. The period counter is pulsed at each clock and reset in response to the output of frequency divider 4 to provide an output that is a binary representation of the clock count during the interval between successive pulses from variable frequency divider 4. Outputs of period counter 6a are presented to a latch 7 in response to each pulse from frequency divider 4 and thence to an arithmetic unit or function generator 8 having a predetermined transfer function describing the relationship between the interval detected by period detector 6 and a period during which each one of coils 11a and 11b is energized during an interval subsequent to the interval detected by period detector 6. As will be described in detail hereinbelow, arithmetic unit 8 provides acceleration or deceleration signals when the detected interval is greater than a predetermined value or not and also provides an output period data to a period generator 9. Period generator 9 comprises a programmable counter 9a which receives the period data from arithmetic unit 8 to preset its full count value and is pulsed at each clock from source 6b. Further included are a gate 9b, flip-flops 9c and 9d and an OR gate 9e. Flip-flops 9c and 9d respond respectively to acceleration and deceleration signals from arithmetic unit 8 to activate coils 11a and 11b through linear amplifiers 10a and 10b. The outputs of flip-flops 9c and 9d are coupled via OR gate 9e to the control terminal of gate 9b to pass clock pulses from source 6b to programmable counter 9a. Gate 9b is thus open in response to each of the acceleration and deceleration to cause programmable counter 9a to initiate counting operation. On full count, programmable counter 9a resets flip-flops 9c and 9d. Thus, flip-flops 9c and 9d each remain in a logical one state during an interval that is a function of the output period data from arithmetic unit 8, and clutch and brake coils 11a and 11b are correspondingly energized.

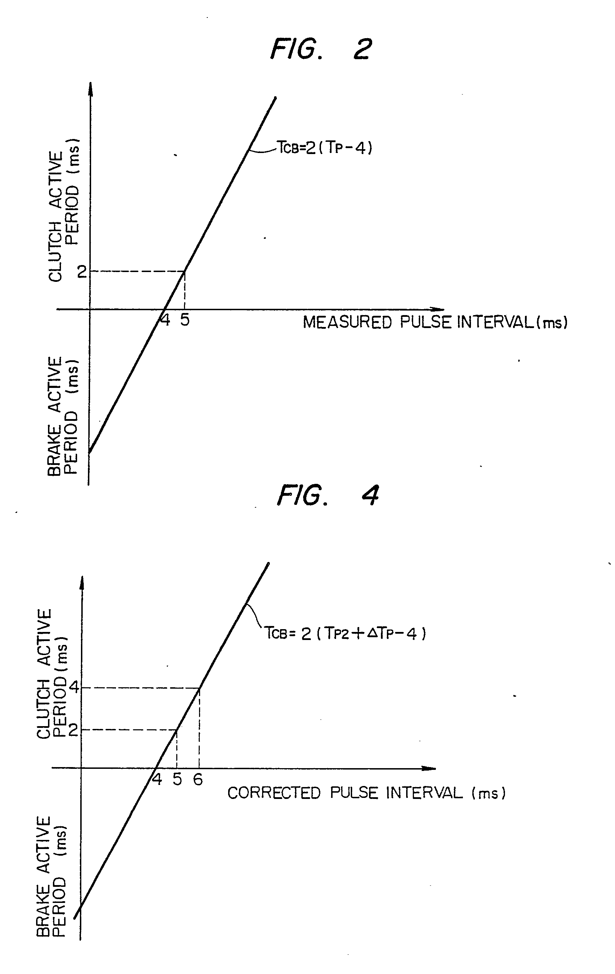

The basic operation of the speed control system of Fig. 1 will be better understood from the following description by reference to Fig. 2. Fig. 2 is a graphic representation of the transfer function according to which arithmetic unit 8 provides translation of input data. This transfer function is described by the following Equation:

$$T_{CB} = A(T_P - B) \qquad (1)$$

where, $T_{CB}$ represents the period during which coil 11a or 11b is energized, $T_P$ representing the period detected by period detector 6, and A and B are constants. Constant A is a factor that determines the response characteristic of the speed control system, and B is appropriately determined to set the minimum speed of the sewing machine when the frequency division ratio of divider 4 is unity. Typical values of constants A and B are selected to have integers 2 and 4, respectively.

With the frequency division ratio being adjusted at a unity value by the setting device 5, impulse generator 2 generates 60 impulses per revolution for a sewing machine speed of 200 rpm. The detected interval $T_P$ by period counter 6a is 5 milliseconds as seen in Fig. 2 which corresponds to a 2 millisecond period for the $T_{CB}$ value. This means that magnetic clutch 11a is energized with a duty cycle of 40% during a subsequent interval between successive pulses from variable frequency divider 4.

If sewing machine load has increased tending its speed to decrease with a resultant increase in the detected pulse interval $T_P$ by an amount determined by Equation (1), an acceleration signal is generated from arithmetic unit 8 to trigger flip-flop 9c, so that clutch coil 11a is energized with a duty cycle greater than 40%. Since sewing machine speed is proportional to an average value of clutch energization periods, an increase in duty cycle accelerates the sewing machine until it reaches 200 rpm. Conversely, a decrease in sewing machine load results in a decrease in duty cycle for clutch energization until sewing machine speed decreases to 200 rpm. If the machine speed has increased to a point above 250 rpm which corresponds to a 4-millisecond interval for $T_P$, a deceleration signal is provided by arithmetic unit 8 which triggers flip-flop 9d to energize magnetic brake 11b. As a result, the sewing machine speed rapidly decreases to 200 rpm.

If the setting device 5 is adjusted by depression of pedal to vary the division ratio from unity to 1/2, the interval $T_P$ is doubled with a corresponding increase in clutch duty cycle. In response to this transient the sewing machine speed increases until it reaches 400 rpm at which the system is again stabilized. With the system so stabilized, the pulse interval $T_P$ and hence the duty cycle assumes the same value as when the sewing machine was run at 200 rpm, so that the $T_P$ and duty cycle values are maintained constant regardless of transient conditions once the system is stabilized to a new division ratio. The operating speed of sewing machine 1 can thus be varied at increments of an integral multiple of 200 rpm corresponding to the frequency division ratio set by device 5.

Although the speed control system of Fig. 1 ensures the sewing machine to stabilize to a constant speed in response to transient conditions, the present invention also provides a speed correction signal to allow the sewing machine to more quickly respond to transients.

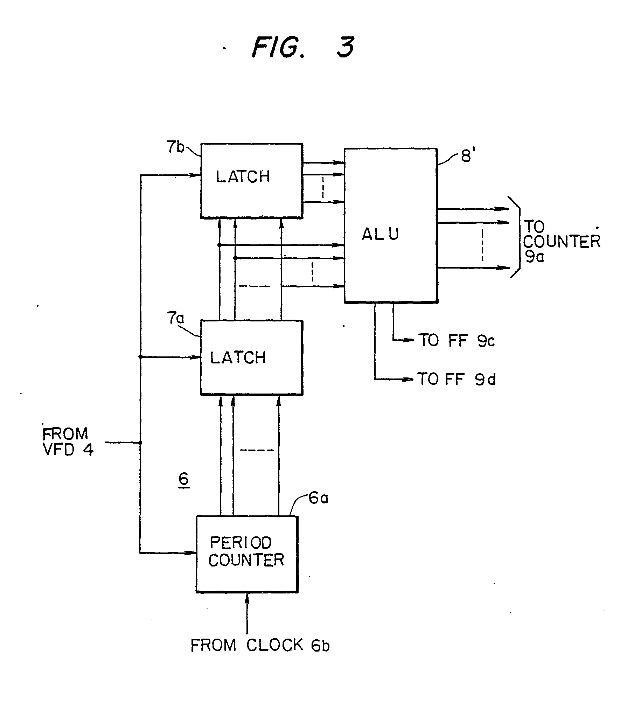

To this end, the system of Fig. 1 is modified as shown in Fig. 3 in which two latching circuits 7a and 7b are provided. The latch 7a receives its inputs from the period counter 6a to provide a period data $T_{P2}$ to the arithmetic unit 8' and also to the latch 7b which provides a period data $T_{P1}$ to the arithmetic unit 8'. These period data are successively generated so that $T_{P2}$ represents the period data which precedes the data $T_{P1}$. The arithmetic unit 8' has a transfer function which is described as follows:

$$T_{CB} = A(T_{P2} + \Delta T_P - B)$$
$$(2)$$

where $\Delta T_P$ represents $(T_{P2} - T_{P1})$. This difference value indicates the amount of correction to be made in response to transients. If the sewing machine speed decreases the correction value has a positive signal to increase $T_{CB}$ and if it increases the correction value assumes a negative sign to decrease $T_{CB}$.

The operation of the modified speed control system of Fig. 3 will be better understood from the description given below.

If the sewing machine speed has decreased so that the preceding and following pulse intervals $T_{P1}$ and $T_{P2}$ are respectively 4 milliseconds and 5 milliseconds, the corrected interval becomes 6 milliseconds which corresponds to $T_P$ of Equation (1). Therefore, the clutch coil 11a is activated for an interval of 4 milliseconds as seen in Fig. 4.

It can be seen from the above that the speed control system as taught by the embodiment of Fig. 3 allows the arithmetic unit 8' to generate a clutch active data representing an interval greater than the subsequent pulse interval if the sewing machine speed is rapidly decreased by a sudden increase in sewing load, so that the clutch coil 11a is continuously activated to meet the sudden load increase. Conversely, a sudden decrease in sewing load will cause the arithmetic unit 8' to generate a brake active data representing an interval greater than the subsequent pulse interval, so that the brake coil 11b is continuously activated to meet the sudden load decrease until the constant speed value is reached.

Various modifications are apparent to those skilled in the art without departing from the scope and content of the present invention which is only limited by the appended claims. For example, the transfer function with which the arithmetic unit of the invention executes input period data can be modified to specific characteristics of sewing machine.

**Claims**

1. A sewing machine having in a closed loop a tachogenerator (2, 3) for generating pulses at a frequency variable as a function of the speed of the sewing machine, a pulse interval counter (6) for measuring the pulse interval of said generated pulses to provide a binary signal indicative of the measured pulse interval, a clutch-and-brake arrangement (11a, 11b) coupled to a motor driven shaft of the sewing machine, and a logic circuit (7, 8, 9, 10) for converting said binary signal into a control pulse for application to said clutch-and-brake arrangement, characterized in that said logic circuit comprises an arithmetic computing unit (8) for translating said pulse interval indicative binary signal into a corresponding duration control signal according to a transfer function
$T = a(t - b)$, where
the absolute value of $T =$ the duration in which the clutch or the brake of the clutch-and-brake arrangement as the case may be is to be energized;

$a$ = a constant representing the gain of said closed loop;

$t$ = the measured pulse interval; and

$b$ = a constant.

2. A sewing machine having in a closed loop a tachogenerator (2, 3) for generating pulses at a frequency variable as a function of the speed of the sewing machine, a pulse interval counter (6) for measuring the pulse interval of said generated pulses to provide a binary signal indicative of the measured pulse interval, a clutch-and-brake arrangement (11a, 11b) coupled to a motor driven shaft of the sewing machine, and a logic circuit (7, 8, 9, 10) for converting said binary signal into a duration control pulse for application to said clutch-and-brake arrangement, characterised in that said logic circuit comprises an arithmetic computing unit (8) for translating said pulse interval indicative binary signal into said duration control pulse according to a transfer function, and by first and second memories (7a, 7b) for storing two successive values ($T_{P1}$, $T_{P2}$) of said binary signal, the later value ($T_{P2}$) being employed by the computing unit for said translation, and in that the arithmetic computing unit (8) comprises means for applying a correction value ($\Delta T_P$), corresponding to the difference between the stored binary signal values, to said later value ($T_{P2}$) so that said measured interval of the tachogenerator pulses is corrected instantaneously as a function of a change in sewing load.

3. A sewing machine as claimed in claim 2, characterised in that said transfer function is described by a relation

$$T = a(t + \Delta t - b),$$

where the absolute value of $T$ = the interval during which the clutch or brake as the case may be is to be energized;

$a$ = a constant representing the gain of the closed loop;

$t$ = the measured interval;

$\Delta t$ = the difference between said stored binary signals; and

$b$ = a constant.

4. A sewing machine a claimed in claim 2 or 3, further characterised by a variable frequency divider (4) for dividing the frequency of said pulses supplied from the tachogenerator (2, 3) for application to said measuring counter (6) and a speed setting device (5) for controlling the frequency division ratio of said variable frequency divider (4) for setting a reference speed at which said rotating body is maintained.

**Revendications**

1. Machine à coudre comprenant dans une boucle fermée une génératrice tachymétrique (2, 3) pour créer des impulsions à fréquence variable en fonction de la vitesse de la machine à coudre, un compteur (6) d'intervalles d'impulsions pour mesurer l'intervalle des impulsions créées afin de fournir un signal binaire indicatif de l'intervalle mesuré d'impulsions, un dispositif (11a, 11b) d'embrayage et de freinage accouplé à un arbre de la machine à coudre, commandé par un moteur, et un circuit logique (7, 8, 9, 10) pour convertir le signal binaire en une impulsion de commande applicable au dispositif d'embrayage et de freinage, caractérisée en ce que le circuit logique comprend une unité (8) de calcul arithmétique pour convertir le signal binaire indicatif de l'intervalle d'impulsions en un signal de commande d'une durée correspondante, conformément à la fonction de transfert:

$$T = a(t - b),$$

dans laquelle la valeur absolue de $T$ = le temps pendant lequel l'embrayage ou le freinage, suivant le cas, du dispositif d'embrayage et de freinage, doit être actionné;

$a$ = une constante représentant le gain de la boucle fermée;

$t$ = l'intervalle mesuré d'impulsion; et

$b$ = une constante.

2. Machine à coudre comprenant dans une boucle fermée une génératrice tachymétrique (2, 3) pour créer des impulsions à fréquence variable en fonction de la vitesse de la machine à coudre, un compteur (6) d'intervalles d'impulsions pour mesurer l'intervalle des impulsions créées afin de fournir un signal binaire indicatif de l'intervalle mesuré d'impulsion, un dispositif (11a, 11b) d'embrayage et de freinage accouplé à un arbre de la machine à coudre, commandé par un moteur, et un circuit logique (7, 8, 9, 10) pour convertir le signal binaire en une impulsion de commande de durée applicable au dispositif d'embrayage et de freinage, caractérisée en ce que le circuit logique comprend une unité (8) de calcul arithmétique pour convertir le signal binaire indicatif de l'intervalle d'impulsion en cette impulsion de commande de durée conformément à une fonction de transfert et par l'intermédiaire d'une première et d'une seconde mémoires (7a, 7b) pour mémoriser deux valeurs successives ($T_{P1}$, $T_{P2}$) de ce signal binaire, le dernière valeur ($T_{P2}$) étant employée par l'unité de calcul pour cette conversion, et en ce que l'unité (8) de calcul arithmétique comprend un moyen pour appliquer une valeur de correction ($\Delta T_P$) correspondant à la différence entre les valeurs mémorisées du signal binaire, à la dernière valeur ($T_{P2}$) de sorte que l'intervalle mesuré des impulsions de la génératrice tachymétrique est corrigé instantanément en fonction d'une variation de la charge de la machine à coudre.

3. Machine à coudre suivant la revendication 2, caractérisée en ce que la fonction de transfert s'exprime par la relation:

$$T = a(t + t - b),$$

dans laquelle la valeur absolue de $T$ = l'intervalle pendant lequel l'embrayage ou le freinage, suivant le cas, doit être actionné;

$a$ = une constante représentant le gain de la boucle fermée;

$t$ = l'intervalle mesuré

$\Delta t$ = la différence entre les signaux binaires mémorisés; et

b = une constante.

4. Machine à coudre suivant l'une des revendications 2 ou 3, caractérisée en outre en ce qu'elle comprend un diviseur (4) de fréquence variable pour diviser la fréquence des impulsions fournies par la génératrice tachymétrique (2, 3) en vue de l'application au compteur (6) de mesure et un dispositif (5) de réglage de vitesse pour régler le rapport de division de fréquence du diviseur (4) de fréquence variable dans le but de régler une vitesse de référence à laquelle le corps en rotation se trouve maintenu.

**Patentansprüche**

1. Nähmaschine mit einem in geschlossener Schleife angeordneten Tachogenerator (2, 3) zur Erzeugung von Impulsen mit einer Frequenz, die als Funktion der Drehzahl der Nähmaschine variiert, einem Impulsperiodendauerzähler (6) zur Messung der Impulsperiodendauer der erzeugten Impulse zur Schaffung eines die gemessene Impulsperiodendauer anzeigenden Binärsignals, einer Kupplungs-Bremsgruppe (11a, 11b), die mit einer durch einen Motor getriebenen Welle der Nähmaschine verbunden ist, und einer Logikschaltung (7, 8, 9, 10) zur Umwandlung des Binärsignals in einen Steuerimpuls zur Einleitung in die Kupplungs-Bremsgruppe, dadurch gekennzeichnet, daß die Logikschaltung eine arithmetische Recheneinheit (8) zur Übertragung des die Impulsperiodendauer anzeigenden Binärsignals in ein entsprechendes Zeitdauersteuersignal entsprechend einer Übertragungsfunktion

T = a(t − b) aufweist, wobei

der Absolutwert von T = der Zeitdauer ist, in der die Kupplung oder die Bremse der Kupplungs-Bremsgruppe je nach Fall energiert werden soll,

a = eine Konstante ist, die den Verstärkungsgrad der geschlossenen Schleife darstellt,

t = die gemessene Impulsperiodendauer ist und

b = eine Konstante ist.

2. Nähmaschine mit einem in einer geschlossenen Schleife angeordneten Tachogenerator (2, 3) zur Erzeugung von Impulsen mit einer Frequenz, die als Funktion der Drehzahl der Nähmaschine variiert, einem Impulsperiodendauerzähler (6) zur Messung der Impulsperioden-

dauer der erzeugten Impulse, um ein die gemessene Impulsperiodendauer anzeigendes Binärsignal zu schaffen, einer Kupplungs-Bremsgruppe (11a, 11b), die mit einer durch einen Motor angetriebenen Welle der Nähmaschine verbunden ist, und einer Logikschaltung (7, 8, 9, 10) zur Umwandlung des Binärsignals in einen Zeitdauersteuerimpuls zur Einleitung in die Kupplungs-Bremsgruppe, dadurch gekennzeichnet, daß die Logikschaltung eine arithmetische Recheneinheit (8) zur Übertragung des die Impulsperiodendauer anzeigenden Binärsignals entsprechend einer Übertragungsfunktion in den Zeitdauersteuerimpuls aufweist, und durch einen ersten und einen zweiten Speicher (7a, 7b) zum Speichern zweier aufeinanderfolgender Werte $(T_{P1}, T_{P2})$ des Binärsignals, wobei der letztere Wert $(T_{P2})$ von der Recheneinheit zur Übertragung benutzt wird, und daß die arithmetische Recheneinheit (8) Mittel zur Aufgabe eines dem Unterschied zwischen den gespeicherten Binärsignalwerten entsprechenden Berichtigungswertes $(\Delta T_P)$ auf den letzteren Wert $(T_{P2})$ aufweist, so daß die gemessene Periodendauer der Tachogenerator-Impulse verzögerungsfrei als Funktion einer Änderung der Nählast korrigiert wird.

3. Nähmaschine nach Anspruch 2, dadurch gekennzeichnet, daß die Übertragungsfunktion durch eine Beziehung

T = a(t + Δt − b)

vorgegeben ist, wobei der Absolutwert von T = der Periodendauer ist, während der die Kupplung oder die Bremse je nach Fall energiert werden soll,

a = eine Konstante ist, die den Verstärkungsgrad der geschlossenen Schleife darstellt,

t = der gemessenen Periodendauer ist,

Δt = dem Unterschied zwischen den gespeicherten Binärsignalen ist und

b = eine Konstante ist.

4. Nähmaschine nach Anspruch 2 oder 3, weiterhin gekennzeichnet durch eine variable Frequenzteilerschaltung (4) zur Teilung der Frequenz der von dem Tachogenerator (2, 3) eingeleiteten Impulse zur Einleitung in den Meßzähler (6), und durch eine Drehzahlvorgabevorrichtung (5) zur Steuerung des Frequenzteilungsverhältnisses der variablen Frequenzteilerschaltung (4) zur Vorgabe einer Bezugsdrehzahl, die für den Drehkörper aufrechterhalten wird.

FIG. 1

- M — 11c
- CL — 11a
- BR — 11b
- SEWING MACHINE — 1
- G — 2
- PRGMBL COUNTER — 9a
- GATE — 9b, 9e
- 9
- 10a, 10b
- ALU — 8
- S Q / R — 9c
- S Q / R — 9d
- LATCH — 7
- PERIOD COUNTER — 6, 6a
- CLOCK — 6b
- SPEED SETTING DEVICE — 5
- VFD — 4
- WS — 3

## FIG. 2

$T_{CB} = 2(T_P - 4)$

CLUTCH ACTIVE PERIOD (ms)

BRAKE ACTIVE PERIOD (ms)

MEASURED PULSE INTERVAL (ms)

## FIG. 4

$T_{CB} = 2(T_{P2} + \Delta T_P - 4)$

CLUTCH ACTIVE PERIOD (ms)

BRAKE ACTIVE PERIOD (ms)

CORRECTED PULSE INTERVAL (ms)

2

# FIG. 3